# EUROPÄISCHE PATENTSCHRIFT

(11) **EP 0 687 517 B1**
(45) Veröffentlichungstag und Bekanntmachung des Hinweises auf die Patenterteilung: **05.03.1997**
(21) Anmeldenummer: 95106512.7
(22) Anmeldetag: 29.04.1995
(51) Int. Cl.: B23D 61/18, F16G 11/08

(54) **Sägeseilverschluss und Verfahren zu seiner Herstellung**
Saw wire fastening and method for producing the same
Dispositif de jonction pour scie à fil et procédé pour sa production

(30) Priorität: 13.06.1994 AT 117/94
(43) Veröffentlichungstag der Anmeldung: 20.12.1995
(73) Patentinhaber: Tyrolit Schleifmittelwerke Swarovski KG, A-6130 Schwaz (AT)
(72) Erfinder: Egger, Franz, A-6134 Vomp (AT); Plattner, Josef, A-6200 Jenbach (AT)

(56) Entgegenhaltungen:
- EP-A- 0 317 965
- EP-A- 0 448 314
- EP-A- 0 489 357
- FR-A- 2 143 221
- GB-A- 1 432 642
- US-A- 3 471 904

## Beschreibung

Die Erfindung bezieht sich auf ein Sägeseil zum Sägen von Naturstein, Mauerwerk, Beton und dergleichen, bestehend aus einem aus mehreren Drähten geflochtenen Tragseil, daran in Abständen befestigten, bevorzugt metallisch gebundenen Hochleistungsschneidstoff enthaltenden Schneidperlen und mindestens einem Sägeseilverschluß zum einmaligen oder wiederholten Fügen der Enden des Sägeseils zu einer geschlossenen Sägeseilschleife, wobei der Verschluß gebildet wird aus je einer linksseitigen und rechtsseitigen Klemmhülse und mindestens einem die Klemmhülsen übergreifenden bzw. verbindenden Verschlußteil, bzw. aus nur einer, die beiden Tragseilenden übergreifenden Klemmhülse. Die Erfindung bezieht sich weiters auf ein Verfahren zur Herstellung eines Verschlusses eines derartigen Sägeseils, bei welchem die Quetschzone einer Klemmhülse mit einem Tragseilende verquetscht wird.

Neben dem Schließen des Sägeseils zu einer geschlossenen, umlaufenden Schleife zum Betrieb in Seilsägemaschinen hat ein Sägeseilverschluß die Aufgabe, mehrere Teilstücke von Sägeseilen zu verbinden wie zum Beispiel bei Reparaturen nach Seilrissen. Besonders beim Bearbeiten von Beton beispielsweise beim Abbau von Gebäudeteilen mit mobilen Seilsägemaschinen und beim Bearbeiten von Naturstein, beim Herstellen von Innenkonturen auf stationären Seilsägemaschinen ist es erforderlich, die Seilschleife rasch, wiederholt und problemlos zu öffnen und zu schließen, auch wenn keine Reparaturen oder Längenanpassungen des Sägeseils benötigt werden.

Auch das verschleißbedingte, wiederholte Einstellen, Ändern und Festhalten des Verdrehgrades des Sägeseils um seine Längsachse im Lauf des natürlichen Verschleißfortschrittes des Schleifbelages der Schneidperlen, der oftmals unrund und nicht konzentrisch erfolgt, verlangt nach einer möglichst rasch und problemlos durchführbaren Trennung und Fügung des Sägeseilverschlusses.

Dazu bieten sich folgende Grundtypen von Sägeseilverschlüssen an:
- Schraubverschlüsse, wie beispielsweise aus der EP 0489357A1 bekannt,
- Klemmverschlüsse, wie beispielsweise aus der DE 3214761 A1 bekannt,
- Gelenkverschlüsse, wie beispielsweise aus der AT-B-400018 bekannt.

Das Anklemmen von Verschlußteilen an das Tragseil des Sägeseils ist eine Methode nach dem Stand der Technik für alle drei genannten Hauptgruppen von Verschlüssen. Bei den Schraubverschlüssen und bei den Gelenkverschlüssen wird das links- und rechtsseitige Endstück des Verschlusses am jeweiligen Seilende angeklemmt und die Öffnung bzw. die Zusammenfügung der so vorbereiteten Seilenden wird mittels Schraubmuffe bzw. Gelenkzwischenstück durchgeführt. Bei reinen Klemmverschlüssen wird eine ungeteilte Muffe oder Klemmhülse jeweils mit dem links- und rechtsseitigen Ende des Tragseils verklemmt.

Neben dem Vorteil der rasch und problemlos oftmals unter Zuhilfenahme von angepaßten Werkzeugen und Vorrichtungen herstellbaren Verbindung von Sägeseilenden nach dem Stand der Technik, namentlich der Schraubverschlüsse, Klemmverschlüsse und Gelenkverschlüsse, treten teilweise erhebliche Nachteile auf. Insbesondere bei den Schraubverschlüssen und bei den Klemmverschlüssen ist der Seilbruch im Nahbereich der Eintrittsstelle des Tragseils in die Endhülse bzw. in die Klemmzone sehr häufig. Mit der Einführung der Gelenkverschlüsse konnten die Standzeiten der Sägeseilverschlüsse zwar wirksam gesteigert werden, jedoch gibt es von Seiten des Marktes Entwicklungstendenzen zu Anwendungen mit verringertem Nenndurchmesser des Sägeseils bei gleichzeitig erhöhter Zugkraft, wodurch die Gelenkverschlüsse an eine Anwendungsgrenze gelangen können.

Aufgabe der Erfindung ist es daher, eine Verbesserung der anders als nach dem Prinzip des Spleißens auf der Verwendung von Klemmhülsen beruhenden Sägeseilverschlüsse hinsichtlich ihrer Standzeit durch Vermeidung der verschlußnahen Tragseilbrüche herbeizuführen sowie ein Herstellverfahren für derartige Sägeseilverschlüsse anzugeben.

Diese Aufgabe wird dadurch gelöst, daß eine elastische Masse, bestehend aus einem elastomeren Kunststoff oder einem Kautschuk, zwischen dem Tragseil und einer Quetschzone einer Klemmhülse angeordnet ist und daß infolge einer gemeinsamen Verpressung der metallischen Quetschzone und der elastischen Masse mit dem Sägeseil die elastische Masse in der Ausnehmung unter bleibender, allseitiger Druckspannung steht und ein Volumensanteil der elastischen Masse an der seilaxial anschließenden Schneidperle beziehungsweise Distanzhülse anliegt.

Das Herstellungsverfahren zeichnet sich dadurch aus, daß eine bevorzugt ringförmige elastische Masse in die Ausnehmung eingebracht wird, bevor die Quetschzone an dem Tragseil festgeklemmt wird, und daß die elastische Masse einen Teil der Quetschverformung bei der nachfolgenden Verklemmung einer Klemmhülse mit dem Tragseilende aufnimmt.

Dabei erstreckt sich der Erfindungsgedanke sowohl auf die Einbringung vorgefertigter, bevorzugt ringförmiger elastischer Massen als auch auf die Einbringung aushärtbarer, bzw. abbindbarer elastischer Massen vor der gemeinsamen Verpressung.
In einer Ausführungsform der Erfindung ist die elastische Masse ein O-Ring, der im Zubehörhandel erhältlich ist.

In einer weiteren Ausführungsform der Erfindung ist die elastische Masse eine durch Gießen, Spritzgießen oder dergleichen bekannte Methode in der Ausnehmung herstellbare, abbindbare bzw. aushärtbare Masse beispielsweise auf Gummibasis vorgesehen. Wesentlich für den Erfindungsgedanken ist dabei, daß die gemeinsame Verpressung eines Quetschteils des Verschlusses mit der elastischen Masse ausreichend hohe allseitige Druckspannung innerhalb der elastischen Masse erzeugt. Dadurch können Massen von höherer Elastizität verwendet werden, die sowohl hohe Schwingungsdämpfung im verschlußnahen Tragseilbereich als auch dauerhafte Abdichtung gegen das Spülwasser ermöglichen. Ein Ausführungsdetail ist dabei die teilweise seitliche Absperrung der Ausnehmung gegenüber angrenzenden Sägeseilbauteilen durch einen radialen Steg, wodurch das seitliche Wegfließen der elastischen Masse beim Quetschvorgang behindert ist mit dem Zweck des allseitigen Druckaufbaus in der Ausnehmung.

Ein Ausführungsbeispiel der Erfindung ist die Bemessung der Ausnehmung für die Aufnahme der elastischen Masse im wesentlichen entsprechend der gesamten Quetschzonenbreite.

Nachfolgend werden Ausführungsbeispiele von erfindungsgemäßen Sägeseilverschlüssen anhand von Zeichnungen näher beschrieben. Es zeigen
Fig. 1 einen Sägeseilgelenkverschluß in Schnittdarstellung mit erfindungsgemäßer ringförmiger elastischer Masse in schmaler Ausführung vor dem Quetschen;
Fig. 2 einen Sägeseilgelenkverschluß in Schnittdarstellung mit erfindungsgemäßer ringförmiger elastischer Masse in breiter Ausführung vor dem Quetschen;
Fig. 3 die Einzelheit einer Quetschzone eines erfindungsgemäßen Sägeseilverschlusses nach dem Quetschen;
Fig. 4 einen Sägeseilgelenkverschluß in Schnittdarstellung mit erfindungsgemäßer ringförmiger elastischer Masse und Distanzhülse zwischen Klemmhülse und erster Schneidperle;
Fig. 5 einen Sägeseilklemmverschluß in Schnittdarstellung mit erfindungsgemäßer elastischer Masse vor dem Quetschvorgang;
Fig. 6 einen Sägeseilschraubverschluß in Schnittdarstellung mit erfindungsgemäßer elastischer Masse vor dem Quetschvorgang.

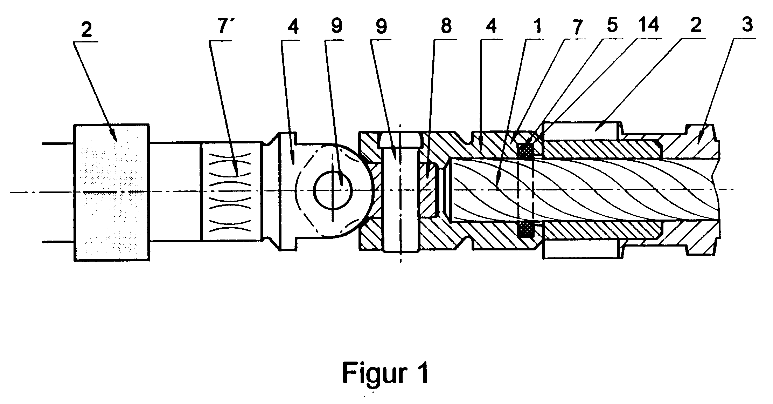

Fig. 1 zeigt einen Sägeseilverschluß nach dem Gelenkprinzip, wobei diese Bauform beispielsweise gegenüber Klemmverschlüssen oder Gewindeverschlüssen bereits wesentlich höhere Beweglichkeit in allen Richtungen aufweist. Dadurch werden höhere Standzeiten des Sägeseils bzw. höhere Biegewechselzahlen unter Last erreicht.

Die vorteilhafte Wirkung gegenüber starren Verschlußhülsen ist auf die geringere Verlagerung von Biegewechselbeanspruchung in den klemmhülsennahen Bereich des Tragseils (1) zurückzuführen.

Fig. 1 zeigt einen Sägeseilgelenkverschluß mit einer erfindungsgemäßen Verbesserung gegenüber dem Stand der Technik durch Anordnung einer schwingungsdämpfenden elastischen Masse in bevorzugter Ringform (5) vor dem Verpressen der Klemmhülse (4) mit dem Ende des Tragseils (1), (1'). Bevorzugt kann in dieser Ausführungsform der Erfindung der Ring (5), ein handelsüblicher O-Ring sein, wie für Dichtzwecke im Maschinenbau bekannt.

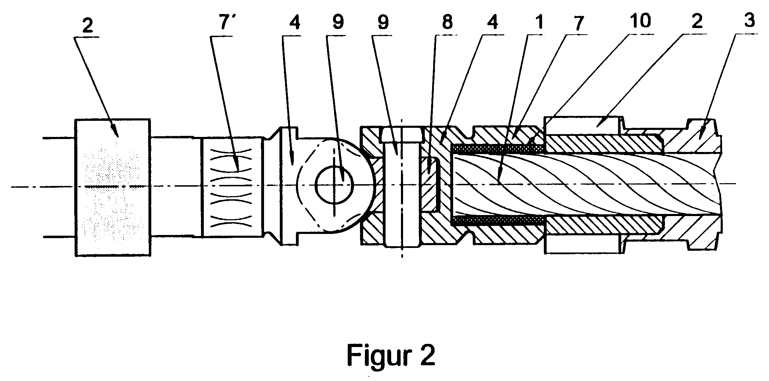

Der Erfindungsgedanke erstreckt sich jedoch auch auf weitere Formen und Zusammensetzungen der elastischen Masse (5), ohne daß alle diese erfindungsgemäß möglichen Formen bildlich dargestellt werden. Genauso erstreckt sich der Erfindungsgedanke auf die Verwendung mehrerer nebeneinander angeordneter Teilmassen, wenn sie nicht ringfömig sind. Ein Ausführungsbeispiel für die Gestaltung der erfindungsgemäßen elastischen Masse ist in Fig. 2 unter Bezugsziffer (10) im noch ungequetschten Zustand dargestellt, wobei die Breite dieser Ringausführung im wesentlichen der vollen Sitzlänge des Tragseils (1) in der Ausnehmung der Klemmhülse (4) entspricht.

Nach dem erfindungsgemäßen Verfahren erfolgt der Quetschvorgang nach dem Zusammenfügen der ringförmigen elastischen Masse (10) und des Tragseilendes (1) mit der Klemmhülse (4) eines Gelenkverschlusses bzw. der Klemmhülse (11) eines Klemmverschlusses bzw. der Klemmhülse (12, 13) eines Gewindeverschlusses. Dabei wird sowohl die Quetschzone (7) einer Klemmhülse (4, 11, 12, 13) durch an sich bekannte Vorrichtungen und/oder Werkzeuge als auch die zwischen Tragseilende (1) und Quetschzone (7) eingebrachte elastische Masse (5, 10) verformt.

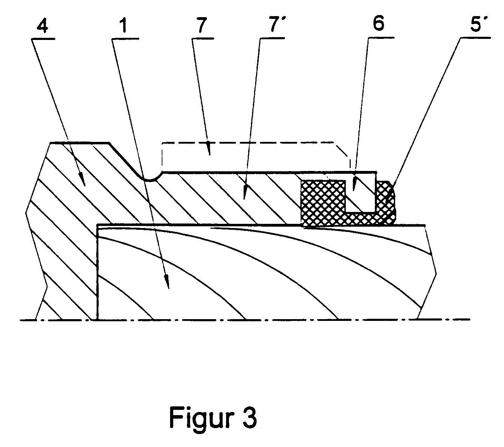

Die elastische Masse (5) wird gemäß Fig. 3 während des Quetschvorgangs nach dem erfindungsgemäßen Herstellverfahren durch einen seitlichen Steg (6) fließbehindert, aber nicht vollkommen gesperrt, sodaß Volumensüberschüsse an elastischer Masse (5') Spalträume zwischen einer Klemmhülse (4, 11, 12, 13) und einer seilaxial anschließenden Schneidperle (2) bzw. Distanzhülse (3) ausfüllen können. Die elastische Masse (5, 10) gerät beim Quetschvorgang unter hohen dauerelastischen Druck, der in alle räumlichen Richtungen gleichmäßig ausgeübt wird.

Nach Fig. 2 erfolgt die seitliche Sperre der elastischen Masse (10) während des Quetschvorgangs der Quetschzone (7) einer Klemmhülse (4, 11, 12, 13) im Sacklochbereich einerseits und gegen die erste anschließende Schneidperle (2) bzw. gegen die erste anschließende Distanzhülse (3) andererseits. Dabei wird der metallische Durchmesserunterschied zwischen Tragseil (1) und Bohrungsdurchmesser der Quetschzone (7) einer Klemmhülse (4, 11, 12, 13) in Teilbereichen in Abhängigkeit der Form eines an sich bekannten Klemmwerkzeugs bis auf Klemmaß reduziert.

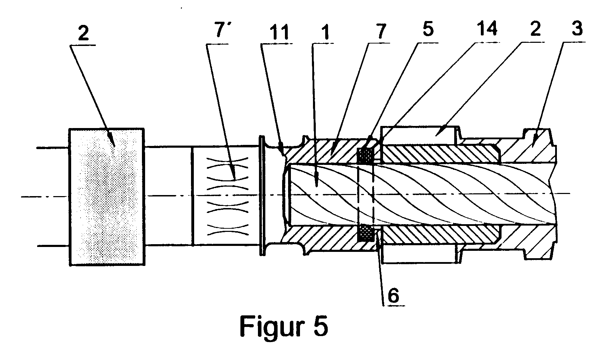

In Versuchen mit erfindungsgemäßen Seilsägeverschlüssen unter Verwendung von Klemmhülsen (4, 11, 12, 13) hat sich stets eine deutliche Steigerung der Standzeit der Verschlüsse gezeigt, unabhängig von der Grundbauform des Seilsägeverschlusses. Besonders nachhaltig war die Erhöhung der Standzeit bei den Gewindeverschlüssen und dem reinen Klemmverschluß. Solche reinen Klemmverschlüsse entsprechend Fig. 5 werden nach dem Stand der Technik hauptsächlich für Reparaturen verwendet.

Für die nicht gelenkigen, auf Klemmhülsen beruhenden Sägeseilverschlüsse nach dem Stand der Technik stellt der gefürchtete Seilbruch im klemmhülsennahen Tragseilbereich ein ernstes Problem der Seilsägetechnik dar. Als Bruchursache konnten hochfrequente Schwingungen zwischen Hülsenmaterial und dem hülsennahen Tragseilbereich gefunden werden. Dieses Standzeitproblem aller Klemmhülsen verwendenden Sägeseilverschlußbauformen kann mit der vorliegenden Erfindung deutlich verbessert werden.

Die Fig. 1, 2 und 4 zeigen einen Gelenkverschluß mit der erfindungsgemäßen ringförmigen elastischen Masse (5, 10) in Schnittdarstellung noch vor der Quetschung in der jeweils rechten Bildhälfte und in gequetschtem Zustand in ungeschnittener Darstellung in der jeweils linken Bildhälfte.

Die Fig. 3 zeigt schematisch die Umrisse einer Quetschzone (7') einer Klemmhülse nach dem erfindungsgemäß durchgeführten Quetschvorgang, wobei die ringförmige elastische Masse (5') nach dem Quetschvorgang die Ausnehmung (14) restlos ausfüllt und überschüssige elastische Masse seitlich ausgetreten ist.

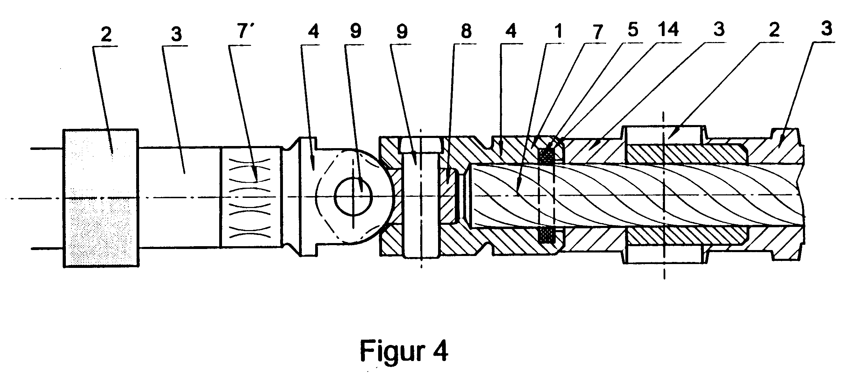

Nach dem Stand der Technik werden die Schneidperlen (2) in seilaxialer Richtung direkt an die Klemmhülsen von Sägeseilverschlüssen gesetzt, um deren Baulänge zu verkürzen, wie in den Fig. 1, 2, 5 und 6 dargestellt oder unter Zwischenschaltung einer ersten Distanzhülse (3), wie in Fig. 4 dargestellt. Die schwingungsdämpfende Wirkung der erfindungsgemäßen elastischen Masse (5), (10) in Sägeseilverschlüssen und deren standzeitsteigernder Einfluß trat unabhängig von der Anordnung und Entfernung der nächstliegenden Schneidperlen (2) am Tragseil (1) auf.

Fig. 5 zeigt einen Klemmverschluß (11) mit erfindungsgemäßer, ringförmiger elastischer Masse (5) an jedem der beiden zu verbindenden Tragseilenden (1, 1'). Diese Bauform eines Sägeseilverschlusses wird bevorzugt zur Reparatur oder zur einmaligen Verlängerung von Sägeseilen verwendet.

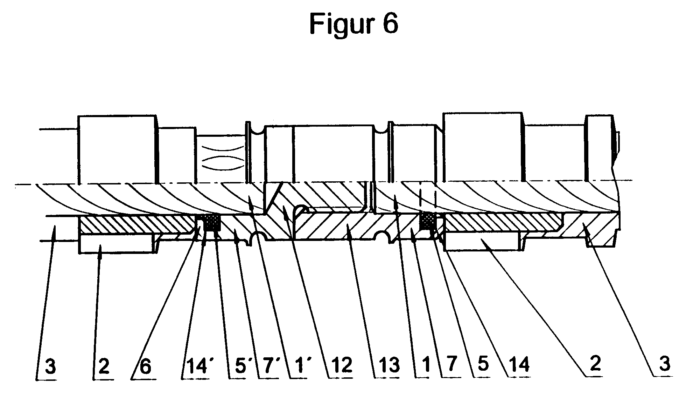

Fig. 6 zeigt einen erfindungsgemäßen Gewindeverschluß für die zu verbindenden Seilenden (1, 1'), bestehend aus der das Bolzengewinde tragenden Klemmhülse (12) und der das Muttergewinde tragenden Klemmhülse (13) und den jeweils im Quetschteil (7, 7') angeordneten Ausnehmungen (14, 14') mit ringförmigen elastischen Massen (5, 5').

### Liste der verwendeten Bezugszeichen

- 1, 1': Tragseilende
- 2: Schneidperle
- 3: Distanzhülse
- 4: Klemmhülse
- 5: Elastische Masse vor dem Quetschvorgang dargestellt
- 5': Elastische Masse nach dem Quetschvorgang dargestellt
- 6: Seitlicher Steg
- 7: Quetschzone vor dem Quetschvorgang
- 7': Quetschzone nach dem Quetschvorgang
- 8: Gelenkzwischenstück
- 9: Gelenkbolzen
- 10: Elastische Masse vor dem Quetschvorgang dargestellt
- 11: Klemmhülse
- 12: Klemmhülse
- 13: Klemmhülse
- 14, 14': Ausnehmung

## Patentansprüche

1. Sägeseil für eine Seilsäge zum Sägen von Naturstein, Mauerwerk, Beton und dergleichen, bestehend aus einem aus mehreren Drähten geflochtenen Tragseil (1), daran in Abständen befestigten, bevorzugt metallisch gebundenen, körnigen Schneidstoff enthaltenden Schneidperlen (2) und mindestens einem Sägeseilverschluß zum einmaligen oder wiederholten Fügen der Enden des Sägeseils zu einer geschlossenen Sägeseilschleife, wobei der Verschluß gebildet wird aus je einer linksseitigen und rechtsseitigen Klemmhülse (4, 12, 13) und mindestens einem die Klemmhülsen übergreifenden bzw. verbindenden Verschlußteil (8), bzw. aus nur einer, die beiden Tragseilenden (1, 1') übergreifenden Klemmhülse (11), gekennzeichnet dadurch, daß eine elastische Masse (5, 10), bestehend aus einem elastomeren Kunststoff oder einem Kautschuk, zwischen dem Tragseil (1) und einer Quetschzone (7) einer Klemmhülse (4, 11, 12, 13) angeordnet ist und daß infolge einer gemeinsamen Verpressung der metallischen Quetschzone (7) und der elastischen Masse (5, 10) mit dem Sägeseil (1) die elastische Masse in der Ausnehmung (14) unter bleibender, allseitiger Druckspannung steht und ein Volumensanteil (5') der elastischen Masse (5, 10) an der seilaxial anschließenden Schneidperle (2) beziehungsweise Distanzhülse (3) anliegt.

2. Verfahren zur Herstellung eines Verschlusses eines Sägeseil gemäß Anspruch 1, bei welchem eine Klemmhülse (4, 11, 12, 13) mit einem Tragseilende (1, 1') verquetscht wird, gekennzeichnet durch die Schrittfolge
a) Einbringen einer bevorzugt ringförmigen elastischen Masse (5, 10), bestehend aus einem elastomeren Kunststoff oder einem Kautschuk, in eine Ausnehmung (14) zwischen Tragseil (1) und Quetschzone (7) und
b) Festklemmen der Klemmhülse (4, 11, 12, 13) an dem Tragseilende (1, 1') durch gemeinsame Verquetschung der metallischen Quetschzone (7) und der elastischen Masse (5, 10) mit Hilfe eines an sich bekannten Quetschwerkzeuges.

3. Verfahren zur Herstellung eines Verschlusses eines Sägeseils nach Anspruch 2, gekennzeichnet dadurch, daß die elastische Masse (10) vor dem Anklemmen der Klemmhülse (4, 11, 12, 13) an das Tragseil (1, 1') durch Gießen, Spritzgießen oder dergleichen im noch nicht abgebundenen Zustand der elastischen Masse (10) in die Ausnehmung (14) eingebracht wird und der die metallische Quetschzone (7) und die elastische Masse (10) gemeinsam verformende Vorgang des Anklemmens an das Tragseil (1) nach dem chemischen Abbinden bzw. Aushärten der elastischen Masse erfolgt.

4. Verfahren zur Herstellung eines Verschlusses eines Sägeseils nach Anspruch 2, gekennzeichnet dadurch, daß die elastische Masse (5), die bevorzugt ein an sich bekannter "O"-Ring ist, gemeinsam mit der metallischen Quetschzone (7) während des Anklemmens an das Tragseil (1) gequetscht wird.

5. Verfahren zur Herstellung eines Verschlusses eines Sägeseils nach einem der Ansprüche 2 bis 4, gekennzeichnet dadurch, daß mindestens ein radialer seitlicher Steg (6) im von der Trennstelle des Tragseils (1) abgewandten Endbereich einer Quetschzone (7) als Fließbehinderung für die elastische Masse (5, 10) während des Quetschvorgangs die Ausnehmung (14) seitlich teilweise abschließt.

6. Verfahren zur Herstellung eines Verschlusses eines Sägeseils nach einem der Ansprüche 2 bis 5, gekennzeichnet dadurch, daß durch den Quetschvorgang zwischen Tragseil (1) und dem seitlichen radialen Steg (6) austretende elastische Masse in seilaxialer Richtung den Zwischenraum (5') zur nächstliegenden Schneidperle (2) bzw. zur nächstliegenden Distanzhülse (3) ausfüllt und abdichtet.

## Claims

1. A cutting wire connector for a wire saw used for cutting natural stone, masonry, concrete, and the like consisting of a main or carrier wire (1) made of several intertwined wire strands, this wire having cutting beads (2) containing preferably metal-bonded granular superabrasives attached to it at certain intervals and having further at least one wire connector for connecting - once or repeatedly - the ends of the wire to form a closed cutting wire loop, said wire connector consisting of a left-sided and a right-sided clamping sleeve (4,12,13) and at least one connection part (8) enclosing and connecting the clamping sleeves or, alternatively, a single clamping sleeve (11) enclosing the two wire ends (1,1') characterized by the fact that an elastic mass (5,10) consisting of an elastomer plastic or rubber material is situated between the main wire (1) and the clamping zone (7) of the clamping sleeve (4,11,12,13) and that as a result of pressing the metal clamping zone (7) and the elastic mass (5,10) onto the main wire (1) the elastic mass in the recess (14) is subject to permanent compressive stress on all sides and a portion (5') of the elastic mass (5,10) lies on the axially adjacent cutting bead (2) or spacer sleeve (3).

2. Method for manufacturing a cutting wire connector according to claim 1, on which a clamping sleeve (4,11,12,13) is clamped onto one end of the main wire (1,1') characterized by the following sequence
a) Introduction of a preferably annular elastic mass (5,10) consisting of an elastomer plastic or rubber material into a recess (14) between the main wire (1) and the clamping zone (7) and
b) Clamping the clamping sleeve (4,11,12,13) onto the end of the main wire (1,1') by clamping together the metal clamping zone (7) and the elastic mass (5,10) with a conventional clamping tool.

3. Method for manufacturing a cutting wire connector according to claim 2, characterized by the fact that the elastic mass (10) is introduced into the recess (14) in an unhardened state by means of pouring, injection molding, and the like before the clamping sleeve (4,11,12,13) is clamped onto the main wire (1,1') and furthermore characterized by the fact that the process of clamping, whereby the metal clamping zone (7) and the elastic mass (10) are both deformed when clamped onto the main wire (1), takes place after the elastic mass has chemically set or hardened.

4. Method of manufacturing a cutting wire connector according to claim 2, characterized by the fact that during clamping the elastic mass (5), which preferably is a conventional O-ring, is clamped onto the main wire (1) together with the metal clamping zone (7).

5. Method for manufacturing a cutting wire connector according to one of the claims 2 to 4, characterized by the fact that at least one radial, lateral web (6) on the end of the clamping zone (7) that is remote from the separation area of the cutting wire (1) forms the border of the recess

6. Method for manufacturing a cutting wire connector according to one of the claims 2 to 5, characterized by the fact that, due to the clamping process, parts of the elastic mass escape from the space between the main wire (1) and the lateral radial web (6), fill the space (5') to the next cutting bead (2) or to the next spacer sleeve (3), and form a seal.

## Revendications

1. Câble de sciage pour une scie machine à câble, destiné au sciage de la pierre naturelle, de la maçonnerie, du béton et des matériaux de ce genre, formé d'un câble porteur (1) composé de plusieurs torons entrelacés, et comportant à certains intervalles des éléments d'une couche de coupe (2), contenant une matière de coupe granuleuse, et de préférence en liaison métallique, et d'au moins une fermeture de câble de sciage, afin d'assembler une seule ou plusieurs fois les extrémités du câble de sciage pour obtenir une boucle fermée, la fermeture étant formée de respectivement une douille de serrage gauche et droite (4,12,13) et d'au moins un élément de fermeture (8) empiétant sur les douilles de serrage ou les reliant, ou bien d'une seule douille de serrage (11) empiétant sur les deux extrémités du câble porteur (1,1'), et caractérisée par le fait qu'une masse élastique (5,10) composée d'une matière synthétique élastomère ou d'un caoutchouc est placée entre le câble porteur (1) et une zone de pressage (7) d'une douille de serrage (4,11,12,13), et qu'en raison d'une compression commune de la zone métallique de pressage (7) et de la masse élastique (5,10) avec le câble porteur (1), la masse élastique est soumise dans le creux (14) à une tension de compression constante, polydirectionnelle, une part de volume (5') de la masse élastique étant contigue à l'élément de la couche de coupe (2) adjacent par rapport à l'axe du câble, ou bien à la douille d'écartement (3).

2. Procédé de fabrication d'une fermeture de câble de sciage conformément à la revendication 1, au cours duquel une douille de serrage (4,11,12, 13) est pressée avec une extrémité du câble porteur (1,1'), et caractérisé par les étapes suivantes:
a) Introduction d'une masse élastique (5,10) de préférence annulaire, composée d'une matière synthétique élastomère ou d'un caoutchouc, dans un creux (14) situé entre câble porteur (1) et zone de pressage (7), et
b) Blocage de la douille de serrage (4,11,12,13) sur l'extrémité du câble porteur (1,1') par compression commune de la zone métallique de pressage (7) et de la masse élastique (5,10), à l'aide d'un outil de pressage traditionnel.

3. Procédé de fabrication d'une fermeture de câble de sciage selon revendication 2, caractérisé par le fait que la masse élastique (10) est introduite dans le creux (14), avant le blocage de la douille de serrage (4,11,12,13) sur le câble porteur (1,1'), par moulage, moulage par injection ou des méthodes de ce genre, alors que la masse élastique (10) n'a pas encore pris, le processus de blocage sur le câble porteur (1), déformant la zone métallique de pressage (7) ainsi que la masse élastique (10), ayant lieu après la prise chimique ou le durcissement de la masse élastique.

4. Procédé de fabrication d'une fermeture de câble de sciage selon revendication 2, caractérisé par le fait que la masse élastique (5), qui est de préférence un anneau torique d'étanchéité traditionnel, est pressée en commun avec la zone métallique de pressage (7) pendant le blocage sur le câble porteur (1).

5. Procédé de fabrication d'une fermeture de câble de sciage selon l'une des revendications 2 à 4, caractérisé par le fait qu'au moins une ailette latérale radiale (6), située dans le secteur terminal d'une zone de pressage (7), opposé au point de sectionnement du câble porteur (1), et empêchant l'écoulement de la masse élastique (5,10), obture en partie et latéralement le creux (14) pendant le processus de pressage.

6. Procédé de fabrication d'une fermeture de câble de sciage selon l'une des revendications 2 à 5, caractérisé par le fait que sous l'action du processus de pressage la masse élastique débordant entre le câble porteur (1) et l'ailette latérale radiale (6) remplit en le rendant étanche, et ceci dans la direction de l'axe du câble, l'intervalle (5') jusqu'à l'élément suivant de la couche de coupe (2) ou jusqu'à la douille d'écartement la plus proche (3).
